# EUROPÄISCHE PATENTSCHRIFT

(11) **EP 3 026 301 B1**
(45) Veröffentlichungstag und Bekanntmachung des Hinweises auf die Patenterteilung: **01.03.2017**
(21) Anmeldenummer: 15192547.6
(22) Anmeldetag: 02.11.2015
(51) Int. Cl.: F16H 61/4148, F16H 61/425, B62D 11/18, F16H 61/456, B62D 11/00, B62D 11/06

(54) **HYDROSTATISCHER FAHRANTRIEB**
HYDROSTATIC TRACTION DRIVE
ENTRAINEMENT DE ROULEMENT HYDROSTATIQUE

(30) Priorität: 26.11.2014 DE 102014117355
(43) Veröffentlichungstag der Anmeldung: 01.06.2016
(73) Patentinhaber: Linde Hydraulics GmbH & Co. KG, 63743 Aschaffenburg (DE)
(72) Erfinder: Wiertellok, Markus, 63834 Sulzbach (DE); Kraft, Dr., Wolfgang, 63762 Ringheim (DE)
(74) Vertreter: Patentship Patentanwaltsgesellschaft mbH

(56) Entgegenhaltungen:
- DE-C2- 4 303 243
- US-A- 4 011 920
- US-A- 4 914 592
- US-A- 5 857 330
- US-A- 5 875 631
- US-A1- 2009 057 049

## Beschreibung

Die Erfindung betrifft einen hydrostatischen Fahrantrieb einer mobilen Arbeitsmaschine mit einem einer ersten Fahrzeugseite zugeordneten ersten hydraulischen Fahrmotor und einem einer zweiten Fahrzeugseite zugeordneten zweiten hydraulischen Fahrmotor, wobei die beiden Fahrmotoren jeweils im offenen Kreislauf betrieben sind und gemeinsam von einer einzigen hydraulischen Pumpe mit Druckmittel versorgt sind, wobei der erste Fahrmotor mittels eines ersten Steuerventils und der zweite Fahrmotor mittels eines zweiten Steuerventils steuerbar ist.

Derartige hydrostatische Fahrantriebe von mobilen Arbeitsmaschinen, bei denen jeder Fahrzeugseite ein hydraulischer Fahrmotor zugeordnet ist werden auch als beidseitiger Fahrantrieb einer Arbeitsmaschine bezeichnet. Derartige beidseitige Fahrantrieb ermöglichen eine Differenzgeschwindigkeitslenkung der Arbeitsmaschine. Derartige Fahrantriebe werden beispielsweise in als Raupenfahrzeugen ausgebildeten Arbeitsmaschinen eingesetzt, beispielsweise Baggern oder Planier- bzw. Laderaupen, wobei die Fahrmotoren hierbei entsprechende Gleisketten bzw. Raupenfahrwerke antreiben.

Aus der DE 43 03 243 C2 ist ein derartiger beidseitiger hydrostatischer Fahrantrieb einer Arbeitsmaschine bekannt, bei dem die beiden hydraulischen Fahrmotoren jeweils im geschlossenen Kreislauf betrieben sind und zur Versorgung des ersten hydraulischen Fahrmotors eine erste hydraulische Pumpe und zur Versorgung des zweiten hydraulischen Fahrmotors eine zweite hydraulische Pumpe vorgesehen ist. Derartige beidseitige hydrostatische Fahrantrieb, bei denen jedem hydraulischen Fahrmotor eine hydraulische Pumpe zugeordnet ist, werden als Zweikreissysteme bezeichnet. Derartige Zweikreissysteme weisen bei Kurvenfahrt der Arbeitsmaschine ein energetisch günstiges Verhalten auf, führen jedoch aufgrund der beiden hydraulischen Fahrpumpen zu einem hohen Bauaufwand.

Der Bauaufwand von beidseitigen hydrostatischen Fahrantrieben lässt sich durch sogenannte Einkreissysteme verringern, bei denen die beiden hydraulischen Fahrmotore jeweils im offenen Kreislauf betrieben sind und zur Versorgung der beiden hydraulischen Fahrmotoren eine einzige hydraulische Pumpe verwendet wird. Bei einer Kurvenfahrt der Arbeitsmaschine können jedoch bei derartigen Einkreissystemen sehr hohe Druckdifferenzen an den beiden Fahrmotoren auftreten, wodurch hohe Leistungsverluste entstehen können.

US 4 914 592 A offenbart einen hydrostatischen Fahrantrieb gemäß dem Oberbegriff des Anspruchs 1 sowie ein Verfahren gemäß dem Oberbegriff des Anspruchs 12. Der vorliegenden Erfindung liegt die Aufgabe zugrunde, einen hydrostatischen Fahrantrieb der eingangs genannten Gattung zur Verfügung zu stellen, der bei einer Kurvenfahrt der Arbeitsmaschine einen energetisch günstigen Betrieb aufweist.

Diese Aufgabe wird erfindungsgemäß dadurch gelöst, dass der erste Fahrmotor und der zweite Fahrmotor jeweils als elektrisch im Verdrängervolumen verstellbarer Verstellmotor und das erste Steuerventil und das zweite Steuerventil jeweils als elektrisch betätigbares Steuerventil ausgebildet ist, wobei eine elektronische Steuereinrichtung vorgesehen ist, die die beiden Fahrmotoren im Verdrängervolumen steuert und die Steuerventile ansteuert, wobei die elektronische Steuereinrichtung derart ausgebildet ist, dass bei einer Kurvenfahrt durch Veränderung des Verdrängervolumens eines der beiden Fahrmotoren und durch Ansteuerung des zugeordneten Steuerventils die zulaufseitigen Drücke der beiden Fahrmotoren auf ein gleiches Druckniveau gebracht werden, bevorzugt geregelt werden. Bei dem erfindungsgemäßen Fahrantrieb ermöglicht es somit die elektronische Steuereinrichtung, dass bei einem Einkreissystem, bei dem die beiden Fahrmotoren von einer einzigen Pumpe mit Druckmittel versorgt werden, während einer Kurvenfahrt durch geeignete Veränderung des Verdrängervolumens eines der beiden Fahrmotore und entsprechende Ansteuerung des demjenigen Fahrmotor, dessen Verdrängervolumen geändert wird, zugeordneten Steuerventils, wobei der dem Fahrmotor zuströmende Volumenstrom angepasst wird, die zulaufseitigen Drücke der beiden Fahrmotoren auf ein gleiches Druckniveau gebracht werden. Die zulaufseitigen Drücke und somit die antreibenden Drücke an den beiden Fahrmotoren werden somit von der elektronischen Steuereinrichtung bei einer Kurvenfahrt der Arbeitsmaschine aneinander angeglichen. Durch dieses Angleichen der beiden eingangsseitigen und antreibenden Drücke an den beiden Fahrmotoren und somit Gleichhalten der beiden eingangsseitigen Drücke an den beiden Fahrmotoren sind die Druckdifferenzen an den beiden Steuerventilen ebenfalls gleich, da an den beiden Fahrmotoren an der Zulaufseite derselbe Förderdruck der Pumpe ansteht. Dadurch können bei einer Kurvenfahrt in einem Einkreissystem energetisch ungünstige hohe Druckdifferenzen an den beiden Fahrmotoren vermieden werden, so dass der erfindungsgemäße Fahrantrieb während einer Kurvenfahrt einen energetisch günstigen Betrieb mit geringen Leistungsverlusten aufweist.

Gemäß einer vorteilhaften Ausführungsform der Erfindung wird zum Angleichen der eingangsseitigen Drücke an den beiden Fahrmotoren während einer Kurvenfahrt von der elektronischen Steuereinrichtung für eine Kurvenfahrt die Ansteuerung des der kurveninneren Fahrzeugseite zugeordneten Steuerventils verringert und von der elektronischen Steuereinrichtung bei einer Kurvenfahrt der zulaufseitige Druck des kurveninneren Fahrmotors auf den zulaufseitigen Druck des kurvenäußeren Fahrmotors geregelt. Durch die Verringerung der Ansteuerung des der kurveninneren Fahrzeugseite zugeordneten Steuerventils, d.h. einer Verringerung des Durchflussquerschnitts an diesem Steuerventil, kann von der elektronischen Steuereinrichtung auf einfache Weise eine Differenzdrehzahl an den beiden Fahrmotoren für eine entsprechende Kurvenfahrt der Arbeitsmaschine vorgegeben und eine Kurvenfahrt eingeleitet werden. Dadurch wird der kurvenäußere Fahrmotor zu dem antreibenden Fahrmotor und der zulaufseitige Druck an dem kurvenäußeren Fahrmotor steigt an. Durch die Regelung des zulaufseitigen Druckes des kurveninneren Fahrmotors auf den zulaufseitigen Druck des kurvenäußeren Fahrmotor können hierbei gleiche zulaufseitige Drücke an den beiden Fahrmotoren während einer Kurvenfahrt auf einfache Weise erzielt werden.

Von der elektronischen Steuereinrichtung muss hierbei zum Angleichen der zulaufseitigen Drücke an den beiden Fahrmotoren der zulaufseitige Druck an dem kurveninneren Fahrmotor auf den zulaufseitigen Druck des kurvenäußeren Fahrmotors erhöht werden. Von der elektronischen Steuereinrichtung wird hierbei zur Regelung des zulaufseitigen Druckes des kurveninneren Fahrmotors auf den zulaufseitigen Druck des kurvenäußeren Fahrmotors das Verdrängervolumen des kurveninneren Fahrmotors verringert und die Ansteuerung des dem kurveninneren Fahrmotor zugeordneten Steuerventils derart verringert, dass eine Drehzahlzunahme des kurveninneren Fahrmotors verhindert wird. Durch die Verringerung des Verdrängervolumens des kurveninneren Fahrmotors wird erzielt, dass der zulaufseitige Druck an dem kurveninneren Fahrmotor ansteigt, so dass der zulaufseitige Druck des kurveninneren Fahrmotors an den zulaufseitigen Druck des kurvenäußeren Fahrmotors angeglichen werden kann. Der zulaufseitige Druck des kurveninneren Fahrmotors stellt somit die Regelgröße dar, der gleich dem zulaufseitigen Druck des kurvenäußeren Fahrmotors sein soll. Da sich durch die Verringerung des Verdrängervolumens des kurveninneren Fahrmotors bei unveränderter Ansteuerung des Steuerventils des kurveninneren Fahrmotors und somit unverändertem Volumenstrom zu dem kurveninneren Fahrmotor dessen Drehzahl erhöhen würde, wird von der elektronischen Steuereinrichtung die Ansteuerung des der kurveninneren Fahrzeugseite zugeordneten Steuerventils derart verringert und somit das Steuerventil des kurveninneren Fahrmotors in Richtung einer Verringerung des Durchflussquerschnitts verstellt, dass eine Drehzahlzunahme des kurveninneren Fahrmotors verhindert wird. Die Verringerung des Durchflussquerschnitts an dem Steuerventil des kurveninneren Fahrmotors muss hierbei in dem Verhältnis erfolgen, wie die Drehzahl des kurveninneren Fahrmotors durch die Verringerung des Verdrängervolumens steigen würde.

Die entsprechende Ansteuerung des Steuerventils in Richtung einer Verringerung des Durchflussquerschnitts auf den durch die Verringerung des Verdrängervolumens entsprechenden Wert, kann hierbei von der elektronischen Steuereinrichtung ermittelt werden, wenn die elektronische Steuereinrichtung den Volumenstrombedarf des kurveninneren Fahrmotors aus dem eingestellten Verdrängervolumen des kurveninneren Fahrmotors, beispielsweise einem von der Steuereinrichtung generierten Soll-Schwenkwinkel eines als Schrägachsenmotors oder Schrägscheibenmotors ausgebildeten Fahrmotors, berechnet und das Steuerventil des kurveninneren Fahrmotors auf den berechneten Volumenstrombedarf des kurveninneren Fahrmotors einstellt.

Das Steuerventil des kurveninneren Fahrmotors kann von der elektronischen Steuereinrichtung auf einfache Weise auf den berechneten Volumenstrombedarf des kurveninneren Fahrmotors eingestellt werden, wenn von der elektronischen Steuereinrichtung der an dem Steuerventil des kurveninneren Fahrmotors dem Fahrmotor zugeführte Volumenstrom aus dem Ansteuersignal des Steuerventils und der Druckdifferenz an dem Steuerventil berechnet wird.

Gemäß einer alternativen und vorteilhaften Ausführungsform der Erfindung wird zum Angleichen der eingangsseitigen Drücke an den beiden Fahrmotoren während einer Kurvenfahrt von der elektronischen Steuereinrichtung für eine Kurvenfahrt die Ansteuerung des der kurveninneren Fahrzeugseite zugeordneten Steuerventils verringert und von der elektronischen Steuereinrichtung bei einer Kurvenfahrt der zulaufseitige Druck des kurvenäußeren Fahrmotors auf den zulaufseitigen Druck des kurveninneren Fahrmotors geregelt. Durch die Verringerung der Ansteuerung des der kurveninneren Fahrzeugseite zugeordneten Steuerventils, d.h. einer Verringerung des Durchflussquerschnitts an diesem Steuerventil, kann von der elektronischen Steuereinrichtung auf einfache Weise eine Differenzdrehzahl an den beiden Fahrmotoren für eine entsprechende Kurvenfahrt der Arbeitsmaschine vorgegeben und eine Kurvenfahrt eingeleitet werden. Dadurch wird der kurvenäußere Fahrmotor zu dem antreibenden Fahrmotor und der zulaufseitige Druck an dem kurvenäußeren Fahrmotor steigt an. Gleichzeitig wird der kurveninnere Fahrmotor zu dem geschleppten Fahrmotor und der zulaufseitige Druck an dem kurveninneren Fahrmotor fällt. Durch die Regelung des zulaufseitigen Druckes des kurvenäußeren Fahrmotors auf den zulaufseitigen Druck des kurveninneren Fahrmotors können hierbei gleiche zulaufseitige Drücke an den beiden Fahrmotoren während einer Kurvenfahrt auf einfache Weise erzielt werden.

Von der elektronischen Steuereinrichtung muss hierbei zum Angleichen der zulaufseitigen Drücke an den beiden Fahrmotoren der zulaufseitige Druck an dem kurvenäußeren Fahrmotor auf den zulaufseitigen Druck des kurveninneren Fahrmotors verringert werden. Von der elektronischen Steuereinrichtung wird hierbei zur Regelung des zulaufseitigen Druckes des kurvenäußeren Fahrmotors auf den zulaufseitigen Druck des kurveninneren Fahrmotors das Verdrängervolumen des kurvenäußeren Fahrmotors vergrößert und die Ansteuerung des dem kurvenäußeren Fahrmotor zugeordneten Steuerventils derart vergrößert, dass eine Drehzahlabnahme des kurvenäußeren Fahrmotors verhindert wird. Durch die Vergrößerung des Verdrängervolumens des kurvenäußeren Fahrmotors wird erzielt, dass der zulaufseitige Druck an dem kurvenäußeren Fahrmotor fällt, so dass der zulaufseitige Druck des kurvenäußeren Fahrmotors an den zulaufseitigen Druck des kurveninneren Fahrmotors angeglichen werden kann. Der zulaufseitige Druck des kurvenäußeren Fahrmotors stellt somit die Regelgröße dar, der gleich dem zulaufseitigen Druck des kurveninneren Fahrmotors sein soll. Da sich durch die Vergrößerung des Verdrängervolumens des kurvenäußeren Fahrmotors bei unveränderter Ansteuerung des Steuerventils des kurvenäußeren Fahrmotors und somit unverändertem Volumenstrom zu dem kurvenäußeren Fahrmotor dessen Drehzahl verringern würde, wird von der elektronischen Steuereinrichtung die Ansteuerung des der kurvenäußeren Fahrzeugseite zugeordneten Steuerventils derart vergrößert und somit das Steuerventil des kurvenäußeren Fahrmotors in Richtung einer Vergrößerung des Durchflussquerschnitts verstellt, dass der durch die Vergrößerung des Verdrängervolumens erhöhte Volumenstrombedarf des kurvenäußeren Fahrmotors gedeckt wird und eine Drehzahlabnahme des kurveninneren Fahrmotors verhindert wird. Die Vergrößerung des Durchflussquerschnitts an dem Steuerventil des kurvenäußeren Fahrmotors muss hierbei in dem Verhältnis erfolgen, wie die Drehzahl des kurvenäußeren Fahrmotors durch die Vergrößerung des Verdrängervolumens sich verringern würde.

Die entsprechende Ansteuerung des Steuerventils in Richtung einer Vergrößerung des Durchflussquerschnitts auf den durch die Vergrößerung des Verdrängervolumens entsprechenden Wert, kann hierbei von der elektronischen Steuereinrichtung ermittelt werden, wenn die elektronische Steuereinrichtung den Volumenstrombedarf des kurvenäußeren Fahrmotors aus dem eingestellten Verdrängervolumen des kurvenäußeren Fahrmotors, beispielsweise einem von der Steuereinrichtung generierten Soll-Schwenkwinkel eines als Schrägachsenmotors oder Schrägscheibenmotors ausgebildeten Fahrmotors, berechnet und das Steuerventil des kurvenäußeren Fahrmotors auf den berechneten Volumenstrombedarf des kurvenäußeren Fahrmotors einstellt.

Das Steuerventil des kurvenäußeren Fahrmotors kann von der elektronischen Steuereinrichtung auf einfache Weise auf den berechneten Volumenstrombedarf des kurvenäußeren Fahrmotors eingestellt werden, wenn von der elektronischen Steuereinrichtung der an dem Steuerventil des kurvenäußeren Fahrmotors dem Fahrmotor zugeführte Volumenstrom aus dem Ansteuersignal des Steuerventils und der Druckdifferenz an dem Steuerventil berechnet wird.

Gemäß einer vorteilhaften Weiterbildung der Erfindung steht die elektronische Steuereinrichtung mit Drucksensoren in Wirkverbindung, mittels denen der zulaufseitige Druck an dem ersten Fahrmotor und an dem zweiten Fahrmotor erfassbar ist. Hierdurch wird es auf einfache Weise möglich, dass die elektronische Steuereinrichtung die zulaufseitigen Drücke der beiden Fahrmotoren während einer Kurvenfahrt erfassen und aneinander angleichen kann.

Gemäß einer zweckmäßigen Ausführungsform der Erfindung treibt der erste Fahrmotor eine erste Gleiskette, beispielsweise ein Raupenlaufwerk oder Kettenlaufwerk, der ersten Fahrzeugseite der Arbeitsmaschine und der zweite Fahrmotor eine zweite Gleiskette, beispielsweise ein Raupenlaufwerk oder Kettenlaufwerk, der zweiten Fahrzeugseite der Arbeitsmaschine an.

Die Erfindung betrifft weiterhin ein Verfahren zum Betrieb eines hydrostatischen Fahrantriebs einer mobilen Arbeitsmaschine, wobei der Fahrantrieb einen ersten hydraulischen Fahrmotor aufweist, der einer ersten Fahrzeugseite zugeordnet ist, und einen zweiten hydraulischen Fahrmotor aufweist, der einer zweiten Fahrzeugseite zugeordnet ist, wobei die beiden Fahrmotoren jeweils im offenen Kreislauf betrieben sind und gemeinsam von einer einzigen hydraulischen Pumpe mit Druckmittel versorgt werden und wobei der erste Fahrmotor mittels eines ersten Steuerventils und der zweite Fahrmotor mittels eines zweiten Steuerventils gesteuert wird, wobei für eine Kurvenfahrt der Arbeitsmaschine eine Differenzdrehzahl an den beiden Fahrmotoren eingestellt wird.

Die Aufgabe, bei einem derartigen hydrostatischen Fahrantrieb bei einer Kurvenfahrt der Arbeitsmaschine einen energetisch günstigen Betrieb zu ermöglichen, wird erfindungsgemäß dadurch gelöst, dass bei einer Kurvenfahrt das Verdrängervolumen des kurveninneren Fahrmotors derart verringert wird und gleichzeitig durch Ansteuerung des dem kurveninneren Fahrmotors zugeordneten Steuerventils der dem kurveninneren Fahrmotor zuströmende Druckmittelvolumenstrom derart verringert wird, dass der zulaufseitige Druck des kurveninneren Fahrmotors an den zulaufseitigen Druck des kurvenäußeren Fahrmotors angeglichen wird und eine Drehzahlzunahme des kurveninneren Fahrmotors verhindert wird.

Die oben genannte Aufgabe wird alternativ durch ein erfindungsgemäßes Verfahren gelöst, bei dem bei einer Kurvenfahrt das Verdrängervolumen des kurvenäußeren Fahrmotors derart vergrößert wird und gleichzeitig durch Ansteuerung des dem kurvenäußeren Fahrmotors zugeordneten Steuerventils der dem kurvenäußeren Fahrmotor zuströmende Druckmittelvolumenstrom derart erhöht wird, dass der zulaufseitige Druck des kurvenäußeren Fahrmotors an den zulaufseitigen Druck des kurveninnere Fahrmotors angeglichen wird und eine Drehzahlabnahme des kurvenäußeren Fahrmotors verhindert wird.

Durch diese Verfahren wird erzielt, dass während einer Kurvenfahrt und einer entsprechenden Differenzdrehzahl an den beiden Fahrmotoren die eingangsseitigen und antreibenden Drücke an den beiden Fahrmotoren aneinander angeglichen werden und somit die eingangsseitigen und antreibenden Drücke an den beiden Fahrmotoren während einer Kurvenfahrt gleich gehalten werden. Durch die aneinander angeglichenen zulaufseitigen Drücke der beiden Fahrmotoren während einer Kurvenfahrt wird erzielt, dass die Druckdifferenzen an den beiden Steuerventilen ebenfalls gleich sind, da an den beiden Fahrmotoren an der Zulaufseite derselbe Förderdruck der Pumpe ansteht. Dadurch können bei einer Kurvenfahrt in einem Einkreissystem energetisch ungünstige hohe Druckdifferenzen an den beiden Fahrmotoren vermieden werden, so dass der erfindungsgemäße Fahrantrieb während einer Kurvenfahrt einen energetisch günstigen Betrieb mit geringen Leistungsverlusten aufweist.

Weitere Vorteile und Einzelheiten der Erfindung werden anhand des in den schematischen Figuren dargestellten Ausführungsbeispiels näher erläutert.

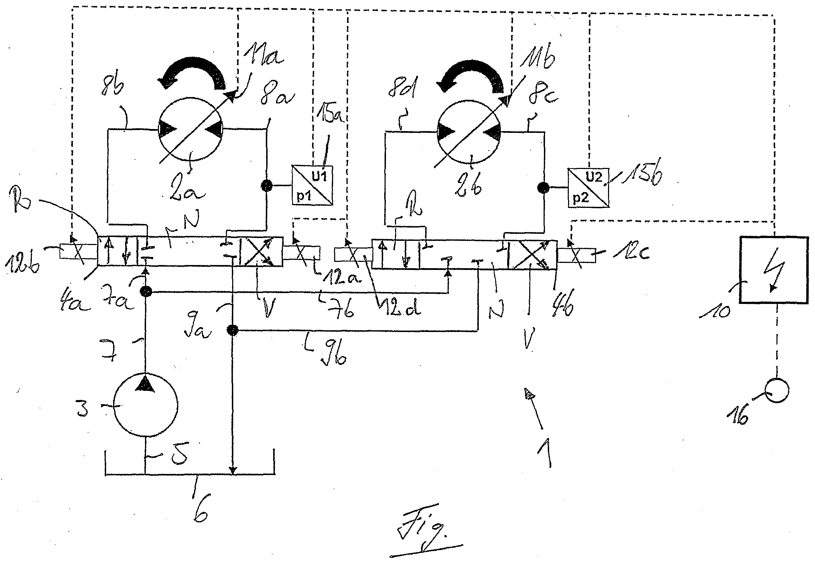

In der Figur ist der Schaltplan eines erfindungsgemäßen hydrostatischen Fahrantriebs 1 einer mobilen Arbeitsmaschine mit einer Differenzgeschwindigkeitslenkung dargestellt.

Der Fahrantrieb 1 der Arbeitsmaschine weist zum Antrieb einer ersten Fahrzeugseite, beispielsweise der linken Fahrzeugseite, eines ersten hydraulischen Fahrmotor 2a und zum Antrieb einer zweiten Fahrzeugseite, beispielsweise der rechten Fahrzeugseite, eines zweiten hydraulischen Fahrmotor 2b auf. Die Fahrmotoren 2a, 2b treiben beispielsweise jeweils eine Gleiskette, beispielsweise ein Raupenlaufwerk oder ein Kettenlaufwerk, an.

Der erste Fahrmotor 2a und der zweite Fahrmotor 2b sind jeweils im offenen Kreislauf betrieben. Zur Versorgung der beiden Fahrmotore 2a, 2b mit Druckmittel ist eine einzige hydraulische Pumpe 3 vorgesehen, so dass der Fahrantrieb 1 ein Einkreissystem bildet, bei dem eine einzelne Pumpe 3 beide Fahrmotoren 2a, 2b mit Druckmittel versorgt. Die Pumpe 3 steht zum Antrieb auf nicht näher dargestellte Weise mit einem Antriebsmotor, beispielsweise einem Verbrennungsmotor, der Arbeitsmaschine in trieblicher Verbindung.

Dem ersten Fahrmotor 2a ist ein erstes Steuerventil 4a zugeordnet, mit dem die Drehrichtung und Geschwindigkeit des ersten Fahrmotors 2a steuerbar ist. Entsprechend ist dem zweiten Fahrmotor 2b ein zweites Steuerventil 4b zugeordnet, mit dem die Drehrichtung und Geschwindigkeit des zweiten Fahrmotors 2b steuerbar ist. Die Steuerventile 4a, 4b sind jeweils als in Zwischenstellungen drosselnde Wegeventile ausgebildet.

Die Pumpe 3 ist im offenen Kreislauf betrieben und saugt mittels einer Ansaugleitung 5 Druckmittel aus einem Behälter 6 an. Die Pumpe 3 fördert in eine Förderleitung 7, von der eine erste Zulaufleitung 7a an das erste Steuerventil 4a und eine zweite Zulaufleitung 7b an das zweite Steuerventil 4b geführt ist.

Das erste Steuerventil 4a steht mittels Verbindungsleitungen 8a, 8b mit dem ersten Fahrmotor 2a in Verbindung. Weiterhin steht das erste Steuerventile 4a mit einer Rücklaufleitung 9a in Verbindung, die zu dem Behälter 6 geführt ist. Das zweite Steuerventil 4b steht mittels Verbindungsleitungen 8c, 8d mit dem zweiten Fahrmotor 2b in Verbindung. Weiterhin steht das zweite Steuerventile 4b mit einer Rücklaufleitung 9b in Verbindung, die zu dem Behälter 6 geführt ist.

Die Fahrmotoren 2a, 2b sind jeweils als stufenlos im Verdrängervolumen verstellbarer Verstellmotor ausgebildet. Der erste Fahrmotor 2a und der zweite Fahrmotor 2b sind jeweils elektrisch im Verdrängervolumen verstellbar, wobei eine elektrische Steuereinrichtung 10 entsprechende elektrische Ansteuersignale für Verstelleinrichtungen 11a, 11 b der Fahrmotoren 2a, 2b erzeugt.

Die Steuerventile 4a, 4b weisen jeweils eine Neutralstellung N, eine Stellung für die Vorwärtsfahrt V und eine Stellung für die Rückwärtsfahrt R auf. In der Neutralstellung N ist die Verbindung der Zulaufleitung 7a bzw. 7b und der Rücklaufleitung 9a bzw. 9b mit den Verbindungsleitungen 8a, 8b bzw. 8c, 8d gesperrt. In der Stellung für die Vorwärtsfahrt V des Steuerventils 4a ist die Zulaufleitung 7a mit der Verbindungsleitung 8a und die Verbindungsleitung 8b mit der Rücklaufleitung 9a verbunden. In der Stellung für die Rückwärtsfahrt R des Steuerventils 4a ist die Zulaufleitung 7a mit der Verbindungsleitung 8b und die Verbindungsleitung 8a mit der Rücklaufleitung 9a verbunden. In der Stellung für die Vorwärtsfahrt V des Steuerventils 4b ist die Zulaufleitung 7b mit der Verbindungsleitung 8c und die Verbindungsleitung 8d mit der Rücklaufleitung 9b verbunden. In der Stellung für die Rückwärtsfahrt R des Steuerventils 4b ist die Zulaufleitung 7b mit der Verbindungsleitung 8d und die Verbindungsleitung 8c mit der Rücklaufleitung 9b verbunden.

Die Steuerventile 4a, 4b sind elektrisch betätigbar und stehen zur Ansteuerung mit der elektronischen Steuereinrichtung 10 in Verbindung. Die Steuerventile 4a, 4b können hierbei mittels nicht näher dargestellter Federeinrichtungen in die Neutralstellung N betätigt sein und mit entsprechenden elektrischen Betätigungseinrichtungen 12a, 12b, 12c, 12d in die Stellung für die Vorwärtsfahrt V und die Stellung für die Rückwärtsfahrt R betätigt werden.

Eingangsseitig steht die elektronische Steuereinrichtung 10 mit Drucksensoren 15a, 15b in Verbindung, mittels denen im Fahrbetrieb der zulaufseitige Druck an den Fahrmotoren 2a, 2b erfassbar ist. In dem in der Figur dargestellten Ausführungsbeispiel ist der Drucksensor 15a an die Verbindungsleitung 8a angeschlossen, um den zulaufseitigen Druck p1 des ersten Fahrmotors 2a zu erfassen, und der Drucksensor 15b an die Verbindungsleitung 8c angeschlossen, um den zulaufseitigen Druck p2 des zweiten Fahrmotors 2b zu erfassen, wobei die Verbindungsleitungen 8a, 8c in der Stellung für die Vorwärtsfahrt V der Steuerventile 4a, 4b die zulaufseitigen Verbindungsleitungen bilden, so dass mit den Drucksensoren 15a, 15b in der Vorwärtsfahrt der Arbeitsmaschine jeweils der zulaufseitige Druck p1, p2 an den beiden Fahrmotoren 2a, 2b erfasst werden kann. Entsprechende Drucksensoren, mit denen in der Rückwärtsfahrt der Arbeitsmaschine jeweils der zulaufseitige Druck an den beiden Fahrmotoren 2a, 2b erfasst werden kann, können an die Verbindungsleitungen 8c, 8d angeschlossen sein.

Eingangsseitig steht die elektronische Steuereinrichtung 10 weiterhin mit einem Geber 16 in Wirkverbindung, mit dem eine Kurvenfahrt der Arbeitsmaschine vorgegeben werden kann.

Bei dem erfindungsgemäßen Fahrantrieb 1 werden während einer Kurvenfahrt von der elektronischen Steuereinrichtung 10 das Verdrängervolumen eines der beiden Fahrmotoren 2a bzw. 2b und das dem Fahrmotor 2a bzw. 2b, dessen Verdrängervolumen verändert wird, zugeordnete Steuerventil 4a bzw. 4b derart angesteuert, dass die zulaufseitigen Drücke der beiden Fahrmotoren auf ein gleiches Druckniveau gebracht werden und somit die beiden zulaufseitigen Drücke der beiden Fahrmotoren 2a, 2b während einer Kurvenfahrt aneinander angeglichen werden. Dadurch wird erzielt, dass die zulaufseitigen Drücke an den Fahrmotoren 2a, 2b, die den entsprechenden Fahrmotor 2a, 2b antreiben, gleich sind, so dass die Druckdifferenzen an den Steuerventilen 4a, 4b ebenfalls gleich sind und an den beiden Fahrmotoren 2a, 2b derselbe Förderdruck der Pumpe 3 anliegt. Dies führt zu einem energetisch günstigen Betrieb des Fahrantriebs 1 während einer Kurvenfahrt mit geringen Leistungsverlusten.

Im Folgenden wird der erfindungsgemäße Fahrantrieb 1 und dessen Betrieb bei einer Kurvenfahrt der Arbeitsmaschine nach links während einer Vorwärtsfahrt beschrieben, wobei der Fahrmotor 2a und das Steuerventil 4a der linken und somit der kurveninneren Fahrzeugseite zugeordnet sind und der Fahrmotor 2b und das Steuerventil 4b der rechten und somit der kurvenäußeren Fahrzeugseite zugeordnet sind. Es versteht sich, dass bei einer Kurvenfahrt nach rechts die im Folgenden beschriebenen Maßnahmen in analoger Weise durchgeführt werden.

Ausgehend von einem Fahrbetrieb (Vorwärtsfahrt, wobei die Verbindungsleitungen 8a, 8c in der Stellung für die Vorwärtsfahrt V der Steuerventile 4a, 4b mit der Pumpe 3 verbunden sind und die Zulaufseiten der Fahrmotoren 2a, 2b bilden) mit einer Geradeausfahrt der Arbeitsmaschine mit einer vorgegebenen Fahrgeschwindigkeit, wobei die beiden Fahrmotoren 2a, 2b auf ein zur Erzielung der Fahrgeschwindigkeit entsprechendes Verdrängervolumen eingestellt sind und die Steuerventile 4a, 4b auf einen bestimmten Durchflussquerschnitt in die Vorwärtsfahrstellung V angesteuert sind, wird zum Einleiten einer Kurvenfahrt der Arbeitsmaschine nach links von der elektronischen Steuereinrichtung 10 an den beiden Fahrmotoren 2a, 2b eine Differenzdrehzahl vorgegeben und eingestellt, indem die Ansteuerung des dem kurveninneren Fahrmotors 2a zugeordneten Steuerventils 4a verringert wird und somit der Durchflussquerschnitt des dem kurveninneren Fahrmotors 2a zugeordneten Steuerventils 4a verringert wird, so dass dem kurveninneren Fahrmotor 2a ein verringerter Druckmittelvolumenstrom zuströmt. Dies führt dazu, dass bei einer Kurvenfahrt der kurvenäußere Fahrmotor 2b der antreibende Fahrmotor wird und dessen zulaufseitiger Druck p2 ansteigt und der kurveninnere Fahrmotor 2a der geschleppte Fahrmotor wird und dessen zulaufseitiger Druck p1 fällt.

Um anschließend während einer Kurvenfahrt die zulaufseitigen Drücke p1, p2 der beiden Fahrmotoren 2a, 2b aneinander anzugleichen, wird gemäß einer ersten Ausführungsform der Erfindung von der elektronischen Steuereinrichtung 10 das Verdrängervolumen des kurveninneren Fahrmotors 2a verringert, beispielsweise bei einer Axialkolbenmaschine in Schrägscheibenbauweise der Schwenkwinkel der in der Neigung verstellbaren Schrägscheibe verringert. In der ersten Ausführungsform der Erfindung bildet der zulaufseitige Druck p1 des kurveninneren Fahrmotors 2a die Regelgröße, der auf den zulaufseitigen Druck p2 des kurvenäußeren Fahrmotors 2b geregelt wird, um während einer Kurvenfahrt gleiche zulaufseitige Drücke p1, p2 an den beiden Fahrmotoren 2a, 2b zu erzielen. Die Verringerung des Verdrängervolumens des kurveninneren Fahrmotors 2a führt dazu, dass dessen zulaufseitiger Druck p1 ansteigt. Die Verringerung des Verdrängervolumens des kurveninneren Fahrmotors 2a würde bei gleichbleibendem zulaufseitige Druckmittelvolumenstrom, der über das Steuerventil 4a in die Verbindungsleitung 8a strömen kann, dazu führen, dass die Drehzahl des kurveninneren Fahrmotors 2a zunimmt. Um diese Drehzahlzunahme des kurveninneren Fahrmotors 2a zu vermeiden, wird von der elektronischen Steuereinrichtung 10 gleichzeitig mit der Verringerung des Verdrängervolumens des kurveninneren Fahrmotors 2a die Ansteuerung des dem kurveninneren Fahrmotors 2a zugeordneten Steuerventils 4a verringert und somit das Steuerventil 4a zur Verringerung des Durchflussquerschnitts in Richtung der Neutralstellung N beaufschlagt. Die Verringerung des Durchflussquerschnitts an dem Steuerventil 4a durch entsprechende Ansteuerung des Steuerventils 4a erfolgt hierbei in dem Verhältnis, wie die Drehzahl des kurveninneren Fahrmotors 2a durch die Verringerung des Verdrängervolumens steigen würde. Hierdurch wird erzielt, dass unter Aufrechterhaltung der Drehzahldifferenz an den beiden Fahrmotoren 2a, 2b während einer Kurvenfahrt der die Regelgröße bildende zulaufseitige Druck p1 des kurveninneren Fahrmotors 2a auf den zulaufseitigen Druck p2 des kurvenäußeren Fahrmotors 2b geregelt wird.

Von der elektronischen Steuereinrichtung 10 kann aus dem aktuell eingestellten Verdrängervolumen des kurveninneren Fahrmotors 2a (Soll-Schwenkwinkel, der von der elektronischen Steuereinrichtung an dem Fahrmotor 2a zur Erhöhung des Druckes p1 vorgegeben wird) der zulaufseitige Druckmittelvolumenstrombedarf des kurveninneren Fahrmotors 2a berechnet werden. Der an dem Steuerventil 4a der Zulaufseite des Fahrmotors 2a zugeführte Druckmittelvolumenstrom kann von der elektronischen Steuereinrichtung 10 aus der Größe des Ansteuersignals der Betätigungseinrichtung 12a und der konstanten Druckdifferenz über das Steuerventil 4a berechnet werden, die in der Steuereinrichtung 10 hinterlegt ist. Die Steuereinrichtung 10 kann somit ein entsprechenden Ansteuersignal für das Steuerventil 4a ermitteln und das Steuerventils 4a gleichzeitig mit der Verringerung des Verdrängervolumens des Fahrmotors 2a derart ansteuern, dass an dem Steuerventil 4a gleichzeitig mit der Verringerung des Verdrängervolumens des Fahrmotors 2a der Durchflussquerschnitt und somit die zulaufseitige Druckmittelvolumenstrom derart verringert wird, dass eine Drehzahlzunahme des kurveninneren Fahrmotors 2a vermieden wird.

Gemäß einer zweiten Ausführungsform der Erfindung wird während einer Kurvenfahrt zur Angleichung der zulaufseitigen Drücke p1, p2 der beiden Fahrmotoren 2a, 2b von der elektronischen Steuereinrichtung 10 das Verdrängervolumen des kurvenäußeren Fahrmotors 2b vergrößert, beispielsweise bei einer Axialkolbenmaschine in Schrägscheibenbauweise der Schwenkwinkel der in der Neigung verstellbaren Schrägscheibe vergrößert. In der zweiten Ausführungsform der Erfindung bildet der zulaufseitige Druck p2 des kurvenäußeren Fahrmotors 2b die Regelgröße, der auf den zulaufseitigen Druck p1 des kurveninneren Fahrmotors 2a geregelt wird, um während einer Kurvenfahrt gleiche zulaufseitige Drücke p1, p2 an den beiden Fahrmotoren 2a, 2b zu erzielen. Die Vergrößerung des Verdrängervolumens des kurvenäußeren Fahrmotors 2b führt dazu, dass dessen zulaufseitiger Druck p2 fällt. Die Vergrößerung des Verdrängervolumens des kurvenäußeren Fahrmotors 2b würde bei gleichbleibendem zulaufseitige Druckmittelvolumenstrom, der über das Steuerventil 4b in die Verbindungsleitung 8c strömen kann, dazu führen, dass die Drehzahl des kurvenäußeren Fahrmotors 2b abnimmt. Um diese Drehzahlabnahme des kurvenäußeren Fahrmotors 2b zu vermeiden, wird von der elektronischen Steuereinrichtung 10 gleichzeitig mit der Vergrößerung des Verdrängervolumens des kurvenäußeren Fahrmotors 2b die Ansteuerung des dem kurvenäußeren Fahrmotors 2b zugeordneten Steuerventils 4b vergrößert und somit das Steuerventils 4b zur Vergrößerung des Durchflussquerschnitts mehr in Richtung der Vorwärtsfahrstellung V beaufschlagt, um den durch die Vergrößerung des Verdrängervolumens erhöhten Volumenstrombedarf des kurvenäußeren Fahrmotors 2b abdecken zu können. Die Vergrößerung des Durchflussquerschnitts an dem Steuerventil 4b durch entsprechende Ansteuerung des Steuerventils 4b erfolgt hierbei in dem Verhältnis, wie die Drehzahl des kurvenäußeren Fahrmotors 2b durch die Vergrößerung des Verdrängervolumens sich verringern würde. Hierdurch wird erzielt, dass unter Aufrechterhaltung der Drehzahldifferenz an den beiden Fahrmotoren 2a, 2b während einer Kurvenfahrt der die Regelgröße bildende zulaufseitige Druck p2 des kurvenäußeren Fahrmotors 2b auf den zulaufseitigen Druck p1 des kurveninneren Fahrmotors 2a geregelt wird.

Von der elektronischen Steuereinrichtung 10 kann aus dem aktuell eingestellten Verdrängervolumen des kurvenäußeren Fahrmotors 2b (Soll-Schwenkwinkel, der von der elektronischen Steuereinrichtung an dem Fahrmotor 2b zur Verringerung des Druckes p2 vorgegeben wird) der zulaufseitige Druckmittelvolumenstrombedarf des kurvenäußeren Fahrmotors 2b berechnet werden. Der an dem Steuerventil 4b der Zulaufseite des Fahrmotors 2b zugeführte Druckmittelvolumenstrom kann von der elektronischen Steuereinrichtung 10 aus der Größe des Ansteuersignals der Betätigungseinrichtung 12c und der konstanten Druckdifferenz über das Steuerventil 4b berechnet werden, die in der Steuereinrichtung 10 hinterlegt ist. Die Steuereinrichtung 10 kann somit ein entsprechenden Ansteuersignal für das Steuerventil 4b ermitteln und das Steuerventils 4b gleichzeitig mit der Vergrößerung des Verdrängervolumens des Fahrmotors 2b derart ansteuern, dass an dem Steuerventil 4b gleichzeitig mit der Vergrößerung des Verdrängervolumens des Fahrmotors 2b der Durchflussquerschnitt und somit der zulaufseitige Druckmittelvolumenstrom derart vergrößert wird, dass eine Drehzahlabnahme des kurvenäußeren Fahrmotors 2b vermieden wird.

Der erfindungsgemäße Fahrantrieb 1, bei dem beide Fahrmotoren 2a, 2b von einer einzigen Pumpe 3 im offenen Kreislauf mit Druckmittel versorgt werden, kann somit während einer Kurvenfahrt der Arbeitsmaschine energetisch optimal im Einkreissystem betrieben werden. Dadurch dass lediglich eine einzige Pumpe 3 zur Versorgung beider Fahrmotoren 2a, 2b erforderlich ist, weist der erfindungsgemäße Fahrantrieb 1 gegenüber einem Zweikreissystem, wobei jeder Fahrmotor von einer eigenen Pumpe versorgt wird, einen geringen Bauaufwand auf. Zudem ist bei dem erfindungsgemäßen Fahrantrieb kein Trennventil erforderlich, mit dem die beiden Fahrmotore 2a, 2b bei Geradeausfahrt der Arbeitsmaschine zusammengeschaltet und während einer Kurvenfahrt getrennt werden können, wodurch eine weitere Kosteneinsparung bei dem erfindungsgemäßen Fahrantrieb erzielt wird und die mit einem Trennventil einhergehenden Nachteile vermieden werden, die darin bestehen, dass bei Summiervorgängen und Trennvorgängen durch das Trennventil ein Ruck in der Fahrbewegung der Arbeitsmaschine auftritt.

## Patentansprüche

1. Hydrostatischer Fahrantrieb (1) einer mobilen Arbeitsmaschine mit einem einer ersten Fahrzeugseite zugeordneten ersten hydraulischen Fahrmotor (2a) und einem einer zweiten Fahrzeugseite zugeordneten zweiten hydraulischen Fahrmotor (2b), wobei die beiden Fahrmotoren (2a, 2b) jeweils im offenen Kreislauf betrieben sind und gemeinsam von einer einzigen hydraulischen Pumpe (3) mit Druckmittel versorgt sind, wobei der erste Fahrmotor (2a) mittels eines ersten Steuerventils (4a) und der zweite Fahrmotor (2b) mittels eines zweiten Steuerventils (4b) steuerbar ist, **dadurch gekennzeichnet, dass** der erste Fahrmotor (2a) und der zweite Fahrmotor (2b) jeweils als elektrisch im Verdrängervolumen verstellbarer Verstellmotor und das erste Steuerventil (4a) und das zweite Steuerventil (4b) jeweils als elektrisch betätigbares Steuerventil ausgebildet ist, wobei eine elektronische Steuereinrichtung (10) vorgesehen ist, die die beiden Fahrmotoren (2a, 2b) im Verdrängervolumen steuert und die Steuerventile (4a, 4b) ansteuert, wobei die elektronische Steuereinrichtung (10) derart ausgebildet ist, dass bei einer Kurvenfahrt durch Veränderung des Verdrängervolumens eines der beiden Fahrmotoren (2a; 2b) und durch Ansteuerung des zugeordneten Steuerventils (4a; 4b) die zulaufseitigen Drücke (p1, p2) der beiden Fahrmotoren (2a, 2b) auf ein gleiches Druckniveau gebracht werden.

2. Hydrostatischer Fahrantrieb nach Anspruch 1, **dadurch gekennzeichnet, dass** von der elektronischen Steuereinrichtung (10) für eine Kurvenfahrt die Ansteuerung des der kurveninneren Fahrzeugseite zugeordneten Steuerventils (4a; 4b) verringert wird und von der elektronischen Steuereinrichtung (10) bei einer Kurvenfahrt der zulaufseitige Druck (p1) des kurveninneren Fahrmotors (2a; 2b) auf den zulaufseitigen Druck (p2) des kurvenäußeren Fahrmotors (2b; 2a) geregelt wird.

3. Hydrostatischer Fahrantrieb nach Anspruch 2, **dadurch gekennzeichnet, dass** von der elektronischen Steuereinrichtung (10) zur Regelung des zulaufseitigen Druckes (p1) des kurveninneren Fahrmotors (2a; 2b) das Verdrängervolumen des kurveninneren Fahrmotors (2a; 2b) verringert wird und die Ansteuerung des dem kurveninneren Fahrmotor (2a; 2b) zugeordneten Steuerventils (4a; 4b) derart verringert wird, dass eine Drehzahlzunahme des kurveninneren Fahrmotors (2a; 2b) verhindert wird.

4. Hydrostatischer Fahrantrieb nach Anspruch 3, **dadurch gekennzeichnet, dass** die elektronische Steuereinrichtung (10) den Volumenstrombedarf des kurveninneren Fahrmotors (2a; 2b) aus dem eingestellten Verdrängervolumen des kurveninneren Fahrmotors (2a; 2b) berechnet und das Steuerventil (4a; 4b) des kurveninneren Fahrmotors (2a; 2b) auf den berechneten Volumenstrombedarf des kurveninneren Fahrmotors (2a; 2b) einstellt.

5. Hydrostatischer Fahrantrieb nach Anspruch 4, **dadurch gekennzeichnet, dass** von der elektronischen Steuereinrichtung (10) der an dem Steuerventil (4a; 4b) des kurveninneren Fahrmotors (2a; 2b) dem Fahrmotor (2a; 2b) zugeführte Volumenstrom aus dem Ansteuersignal des Steuerventils (2a; 2b) und der Druckdifferenz an dem Steuerventil (4a; 4b) berechnet wird.

6. Hydrostatischer Fahrantrieb nach Anspruch 1, **dadurch gekennzeichnet, dass** von der elektronischen Steuereinrichtung (10) für eine Kurvenfahrt die Ansteuerung des der kurveninneren Fahrzeugseite zugeordneten Steuerventils (4a; 4b) verringert wird und von der elektronischen Steuereinrichtung (10) bei einer Kurvenfahrt der zulaufseitige Druck (p2) des kurvenäußeren Fahrmotors (2b; 2a) auf den zulaufseitigen Druck (p1) des kurveninneren Fahrmotors (2a; 2b) geregelt wird.

7. Hydrostatischer Fahrantrieb nach Anspruch 6, **dadurch gekennzeichnet, dass** von der elektronischen Steuereinrichtung (10) zur Regelung des zulaufseitigen Druckes (p2) des kurvenäußeren Fahrmotors (2b; 2a) das Verdrängervolumen des kurvenäußeren Fahrmotors (2b; 2a) vergrößert wird und die Ansteuerung des dem kurvenäußeren Fahrmotor (2b; 2a) zugeordneten Steuerventils (4b; 4a) derart vergrößert wird, dass eine Drehzahlabnahme des kurvenäußeren Fahrmotors (2b; 2a) verhindert wird.

8. Hydrostatischer Fahrantrieb nach Anspruch 7, **dadurch gekennzeichnet, dass** die elektronische Steuereinrichtung (10) den Volumenstrombedarf des kurvenäußeren Fahrmotors (2b; 2a) aus dem eingestellten Verdrängervolumen des kurvenäußeren Fahrmotors (2b; 2a) berechnet und das Steuerventil (4b; 4a) des kurvenäußeren Fahrmotors (2b; 2a) auf den berechneten Volumenstrombedarf des kurvenäußeren Fahrmotors (2b; 2a) einstellt.

9. Hydrostatischer Fahrantrieb nach Anspruch 8, **dadurch gekennzeichnet, dass** von der elektronischen Steuereinrichtung (10) der an dem Steuerventil (4b; 4a) des kurvenäußeren Fahrmotors (2b; 2a) dem Fahrmotor (2b; 2a) zugeführte Volumenstrom aus dem Ansteuersignal des Steuerventils (4b; 4a) und der Druckdifferenz an dem Steuerventil (4b; 4a) berechnet wird.

10. Hydrostatischer Fahrantrieb nach einem der Ansprüche 1 bis 9, **dadurch gekennzeichnet, dass** die elektronische Steuereinrichtung (10) mit Drucksensoren (15a, 15b) in Wirkverbindung steht, mittels denen derzulaufseitige Druck (p1, p2) an dem ersten Fahrmotor (2a) und an dem zweiten Fahrmotor (2b) erfassbar ist.

11. Hydrostatischer Fahrantrieb nach einem der vorangegangenen Ansprüche, **dadurch gekennzeichnet, dass** der erste Fahrmotor (2a) eine erste Gleiskette der ersten Fahrzeugseite der Arbeitsmaschine und der zweite Fahrmotor (2b) eine zweite Gleiskette der zweiten Fahrzeugseite der Arbeitsmaschine antreibt.

12. Verfahren zum Betrieb eines hydrostatischen Fahrantriebs (1) einer mobilen Arbeitsmaschine, wobei der Fahrantrieb einen ersten hydraulischen Fahrmotor (2a) aufweist, der einer ersten Fahrzeugseite zugeordnet ist, und einen zweiten hydraulischen Fahrmotor (2a) aufweist, der einer zweiten Fahrzeugseite zugeordnet ist, wobei die beiden Fahrmotoren (2a, 2b) jeweils im offenen Kreislauf betrieben sind und gemeinsam von einer einzigen hydraulischen Pumpe (3) mit Druckmittel versorgt werden und wobei der erste Fahrmotor (2a) mittels eines ersten Steuerventils (4a) und der zweite Fahrmotor (2b) mittels eines zweiten Steuerventils (4b) gesteuert wird, wobei für eine Kurvenfahrt eine Differenzdrehzahl an den beiden Fahrmotoren (2a, 2b) eingestellt wird, **dadurch gekennzeichnet, dass** bei einer Kurvenfahrt das Verdrängervolumen des kurveninneren Fahrmotors (2a; 2b) derart verringert wird und gleichzeitig durch Ansteuerung des dem kurveninneren Fahrmotors (2a; 2b) zugeordneten Steuerventils (4a; 4b) der dem kurveninneren Fahrmotor (2a; 2b) zuströmende Druckmittelvolumenstrom derart verringert wird, dass der zulaufseitige Druck des kurveninneren Fahrmotors (2a; 2b) an den zulaufseitigen Druck des kurvenäußeren Fahrmotors (2b; 2a) angeglichen wird und eine Drehzahlzunahme des kurveninneren Fahrmotors (2a; 2b) verhindert wird,
oder
dass bei einer Kurvenfahrt das Verdrängervolumen des kurvenäußeren Fahrmotors (2b; 2a) derart vergrößert wird und gleichzeitig durch Ansteuerung des dem kurvenäußeren Fahrmotors (2b; 2a) zugeordneten Steuerventils (4;b 4a) der dem kurvenäußeren Fahrmotor (2b; 2a) zuströmende Druckmittelvolumenstrom derart erhöht wird, dass der zulaufseitige Druck des kurvenäußeren Fahrmotors (2b; 2a) an den zulaufseitigen Druck des kurveninnere Fahrmotors (2a; 2b) angeglichen wird und eine Drehzahlabnahme des kurvenäußeren Fahrmotors (2b; 2a) verhindert wird.

## Claims

1. Hydrostatic traction drive (1) of a mobile working machine having a first hydraulic traction motor (2a) which is assigned to a first vehicle side, and a second hydraulic traction motor (2b) which is assigned to a second vehicle side, wherein the two traction motors (2a, 2b) are each operated in an open circuit and are jointly supplied with pressure medium by a single hydraulic pump (3), wherein the first traction motor (2a) can be controlled by means of a first control valve (4a), and the second traction motor (2b) can be controlled by means of a second control valve (4b), **characterized in that** the first traction motor (2a) and the second traction motor (2b) are each embodied as an adjustment motor which can be adjusted electrically in respect of the displacement volume, and the first control valve (4a) and the second control valve (4b) are each embodied as a control valve which can be actuated electrically, wherein an electronic control device (10) is provided which controls the two traction motors (2a, 2b) in respect of the displacement volume and actuates the control valves (4a, 4b), wherein the electronic control device (10) is embodied in such a way that during cornering the inflow-side pressures (p1, p2) of the two traction motors (2a, 2b) are brought to the same pressure level by changing the displacement volume of one of the two traction motors (2a; 2b) and by actuating the assigned control valve (4a; 4b).

2. Hydrostatic traction drive according to Claim 1, **characterized in that** the actuation of the control valve (4a; 4b) which is assigned to the vehicle side on the inside of the bend is reduced by the electronic control device (10) for cornering, and during cornering the inflow-side pressure (p1) of the traction motor (2a; 2b) on the inside of the bend is regulated by the electronic control device (10) to the inflow-side pressure (p2) of the traction motor (2b; 2a) on the outside of the bend.

3. Hydrostatic traction drive according to Claim 2, **characterized in that**, in order to regulate the inflow-side pressure (p1) of the traction motor (2a; 2b) on the inside of the bend, the displacement volume of the traction motor (2a; 2b) on the inside of the bend is reduced by the electronic control device (10), and the actuation of the control valve (4a; 4b) which is assigned to the traction motor (2a; 2b) on the inside of the bend is reduced in such a way that an increase in rotational speed of the traction motor (2a; 2b) on the inside of the bend is prevented.

4. Hydrostatic traction drive according to Claim 3, **characterized in that** the electronic control device (10) calculates the volume flow demand of the traction motor (2a; 2b) on the inside of the bend from the displacement volume which is set for the traction motor (2a; 2b) on the inside of the bend, and sets the control valve (4a; 4b) of the traction motor (2a; 2b) on the inside of the bend to the calculated volume flow demand of the traction motor (2a; 2b) on the inside of the bend.

5. Hydrostatic traction drive according to Claim 4, **characterized in that** the volume flow which is fed to the traction motor (2a; 2b) at the control valve (4a; 4b) of the traction motor (2a; 2b) on the inside of the bend is calculated by the electronic control device (10) from the actuation signal of the control valve (2a; 2b) and the pressure difference at the control valve (4a; 4b).

6. Hydrostatic traction drive according to Claim 1, **characterized in that** the actuation of the control valve (4a; 4b) which is assigned to the vehicle side on the inside of the bend is reduced by the electronic control device (10) for cornering, and during cornering the inflow-side pressure (p2) of the traction motor (2b; 2a) on the outside of the bend is regulated by the electronic control device (10) to the inflow-side pressure (p1) of the traction motor (2a; 2b) on the inside of the bend.

7. Hydrostatic traction drive according to Claim 6, **characterized in that**, in order to regulate the inflow-side pressure (p2) of the traction motor (2b; 2a) on the outside of the bend, the displacement volume of the traction motor (2b; 2a) on the outside of the bend is increased by the electronic control device (10), and the actuation of the control valve (4b; 4a) which is assigned to the traction motor (2b; 2a) on the outside of the bend is increased in such a way that a reduction in rotational speed of the traction motor (2b; 2a) on the outside of the bend is prevented.

8. Hydrostatic traction drive according to Claim 7, **characterized in that** the electronic control device (10) calculates the volume flow demand of the traction motor (2b; 2a) on the outside of the bend from the displacement volume which is set for the traction motor (2b; 2a) on the outside of the bend, and sets the control valve (4b; 4a) of the traction motor (2b; 2a) on the outside of the bend to the calculated volume flow demand of the traction motor (2b; 2a) on the outside of the bend.

9. Hydrostatic traction drive according to Claim 8, **characterized in that** the volume flow which is fed to the traction motor (2b; 2a) at the control valve (4b; 4a) of the traction motor (2b; 2a) on the outside of the bend is calculated by the electronic control device (10) from the actuation signal of the control valve (4b; 4a) and the pressure difference at the control valve (4b; 4a).

10. Hydrostatic traction drive according to one of Claims 1 to 9, **characterized in that** the electronic control device (10) is operatively connected to pressure sensors (15a, 15b) by means of which the inflow-side pressure (p1, p2) can be detected at the first traction motor (2a) and at the second traction motor (2b).

11. Hydrostatic traction drive according to one of the preceding claims, **characterized in that** the first traction motor (2a) drives a first caterpillar track of the first vehicle side of the working machine, and the second traction motor (2b) drives a second caterpillar track of the second vehicle side of the working machine.

12. Method for operating a Hydrostatic traction drive (1) of a mobile working machine, wherein the traction drive has a first hydraulic traction motor (2a) which is assigned to a first vehicle side, and a second hydraulic traction motor (2a) which is assigned to a second vehicle side, wherein the two traction motors (2a, 2b) are each operated in an open circuit and are jointly supplied with pressure medium by a single hydraulic pump (3), and wherein the first traction motor (2a) is controlled by means of a first control valve (4a), and the second traction motor (2b) is controlled by means of a second control valve (4b), wherein for cornering a differential rotational speed is set at the two traction motors (2a, 2b), **characterized in that** during cornering the displacement volume of the traction motor (2a; 2b) on the inside of the bend is reduced, and at the same time the pressure medium volume flow flowing to the traction motor (2a; 2b) on the inside of the bend is reduced by actuating the control valve (4a; 4b) assigned to the traction motor (2a; 2b) on the inside of the bend, in such a way that the inflow-side pressure of the traction motor (2a; 2b) on the inside of the bend is approximated to the inflow-side pressure of the traction motor (2b; 2a) on the outside of the bend, and an increase in rotational speed of the traction motor (2a; 2b) on the inside of the bend is prevented,
or
**in that** during cornering the displacement volume of the traction motor (2b; 2a) on the outside of the bend is increased, and at the same time the pressure medium volume flow flowing to the traction motor (2b; 2a) on the outside of the bend is increased by actuating the control valve (4b; 4a) assigned to the traction motor (2b; 2a) on the outside of the bend, in such a way that the inflow-side pressure of the traction motor (2b; 2a) on the outside of the bend is approximated to the inflow-side pressure of the traction motor (2a; 2b) on the inside of the bend, and a decrease in rotational speed of the traction motor (2b; 2a) on the outside of the bend is prevented.

## Revendications

1. Mécanisme de roulement hydrostatique (1) d'une machine de travail mobile, comprenant un premier moteur de déplacement hydraulique (2a) associé à un premier côté de véhicule et un deuxième moteur de déplacement hydraulique (2b) associé à un deuxième côté de véhicule, les deux moteurs de déplacement (2a, 2b) fonctionnant respectivement en circuit ouvert et étant alimenté en commun en fluide sous pression par une unique pompe hydraulique (3), le premier moteur de déplacement (2a) pouvant être commandé au moyen d'une première vanne de commande (4a) et le deuxième moteur de déplacement (2b) pouvant être commandé au moyen d'une deuxième vanne de commande (4b), **caractérisé en ce que** le premier moteur de déplacement (2a) et le deuxième moteur de déplacement (2b) sont respectivement réalisés sous la forme d'un moteur à cylindrée variable dont le volume déplacé est réglable électriquement, et la première vanne de commande (4a) et la deuxième vanne de commande (4b) sont respectivement réalisées sous la forme d'une vanne de commande à actionnement électrique, un dispositif de commande électronique (10) étant présent, lequel commande le volume déplacé des deux moteurs de déplacement (2a, 2b) et excite les vannes de commande (4a, 4b), le dispositif de commande électronique (10) étant configuré de telle sorte que lors d'un déplacement en virage, les pressions côté arrivée (p1, p2) des deux moteurs de déplacement (2a, 2b) sont amenées à un même niveau de pression en modifiant le volume déplacé de l'un des deux moteurs de déplacement (2a ; 2b) et en excitant la vanne de commande (4a ; 4b) associée.

2. Mécanisme de roulement hydrostatique selon la revendication 1, **caractérisé en ce que** pour un déplacement en virage, le dispositif de commande électronique (10) réduit l'excitation de la vanne de commande (4a ; 4b) associée au côté du véhicule à l'intérieur du virage et, lors d'un déplacement en virage, le dispositif de commande électronique (10) régule la pression côté arrivée (p1) du moteur de déplacement (2a ; 2b) à l'intérieur du virage à la pression côté arrivée (p2) du moteur de déplacement (2b ; 2a) à l'extérieur du virage.

3. Mécanisme de roulement hydrostatique selon la revendication 2, **caractérisé en ce que** pour réguler la pression côté arrivée (p1) du moteur de déplacement (2a ; 2b) à l'intérieur du virage, le dispositif de commande électronique (10) réduit le volume déplacé du moteur de déplacement (2a ; 2b) à l'intérieur du virage et réduit l'excitation de la vanne de commande (4a ; 4b) associée au moteur de déplacement (2a ; 2b) à l'intérieur du virage de manière à empêcher une augmentation de la vitesse de rotation du moteur de déplacement (2a ; 2b) à l'intérieur du virage.

4. Mécanisme de roulement hydrostatique selon la revendication 3, **caractérisé en ce que** le dispositif de commande électronique (10) calcule le débit volumique nécessaire du moteur de déplacement (2a ; 2b) à l'intérieur du virage à partir du volume déplacé réglé du moteur de déplacement (2a ; 2b) à l'intérieur du virage et règle la vanne de commande (4a ; 4b) du moteur de déplacement (2a ; 2b) à l'intérieur du virage sur le débit volumique nécessaire calculé du moteur de déplacement (2a ; 2b) à l'intérieur du virage.

5. Mécanisme de roulement hydrostatique selon la revendication 4, **caractérisé en ce que** le débit volumique acheminé au moteur de déplacement (2a ; 2b) au niveau de la vanne de commande (4a ; 4b) du moteur de déplacement (2a ; 2b) à l'intérieur du virage est calculé par le dispositif de commande électronique (10) à partir du signal d'excitation de la vanne de commande (2a ; 2b) et de la différence de pression au niveau de la vanne de commande (4a ; 4b).

6. Mécanisme de roulement hydrostatique selon la revendication 1, **caractérisé en ce que** pour un déplacement en virage, le dispositif de commande électronique (10) réduit l'excitation de la vanne de commande (4a ; 4b) associée au côté du véhicule à l'intérieur du virage et, lors d'un déplacement en virage, le dispositif de commande électronique (10) régule la pression côté arrivée (p2) du moteur de déplacement (2b ; 2a) à l'extérieur du virage à la pression côté arrivée (p1) du moteur de déplacement (2a ; 2b) à l'intérieur du virage.

7. Mécanisme de roulement hydrostatique selon la revendication 6, **caractérisé en ce que** pour réguler la pression côté arrivée (p2) du moteur de déplacement (2b ; 2a) à l'extérieur du virage, le dispositif de commande électronique (10) augmente le volume déplacé du moteur de déplacement (2b ; 2a) à l'extérieur du virage et augmente l'excitation de la vanne de commande (4b ; 4a) associée au moteur de déplacement (2b ; 2a) à l'extérieur du virage de manière à empêcher une diminution de la vitesse de rotation du moteur de déplacement (2b ; 2a) à l'extérieur du virage.

8. Mécanisme de roulement hydrostatique selon la revendication 7, **caractérisé en ce que** le dispositif de commande électronique (10) calcule le débit volumique nécessaire du moteur de déplacement (2b ; 2a) à l'extérieur du virage à partir du volume déplacé réglé du moteur de déplacement (2b ; 2a) à l'intérieur du virage et règle la vanne de commande (4b ; 4a) du moteur de déplacement (2b ; 2a) à l'extérieur du virage sur le débit volumique nécessaire calculé du moteur de déplacement (2b ; 2a) à l'extérieur du virage.

9. Mécanisme de roulement hydrostatique selon la revendication 8, **caractérisé en ce que** le débit volumique acheminé au moteur de déplacement (2b ; 2a) au niveau de la vanne de commande (4b ; 4a) du moteur de déplacement (2b ; 2a) à l'extérieur du virage est calculé par le dispositif de commande électronique (10) à partir du signal d'excitation de la vanne de commande (4b ; 4a) et de la différence de pression au niveau de la vanne de commande (4b ; 4a).

10. Mécanisme de roulement hydrostatique selon l'une des revendications 1 à 9, **caractérisé en ce que** le dispositif de commande électronique (10) est en liaison fonctionnelle avec des capteurs de pression (15a, 15b) au moyen desquels peut être détectée la pression côté arrivée (p1, p2) au niveau du premier moteur de déplacement (2a) et au niveau du deuxième moteur de déplacement (2b).

11. Mécanisme de roulement hydrostatique selon l'une des revendications précédentes, **caractérisé en ce que** le premier moteur de déplacement (2a) entraîne une première chenille du premier côté de véhicule de la machine de travail et le deuxième moteur de déplacement (2b) entraîne une deuxième chenille du deuxième côté de véhicule de la machine de travail.

12. Procédé pour faire fonctionner un mécanisme de roulement hydrostatique (1) d'une machine de travail mobile, le mécanisme de roulement comprenant un premier moteur de déplacement hydraulique (2a) qui est associé à un premier côté de véhicule et un deuxième moteur de déplacement hydraulique (2b) qui est associé à un deuxième côté de véhicule, les deux moteurs de déplacement (2a, 2b) fonctionnant respectivement en circuit ouvert et étant alimenté en commun en fluide sous pression par une unique pompe hydraulique (3), le premier moteur de déplacement (2a) étant commandé au moyen d'une première vanne de commande (4a) et le deuxième moteur de déplacement (2b) étant commandé au moyen d'une deuxième vanne de commande (4b), une vitesse de rotation différentielle étant réglée au niveau des deux moteurs de déplacement (2a, 2b) pour un déplacement en virage, **caractérisé en ce que** lors d'un déplacement en virage, le volume déplacé du moteur de déplacement (2a ; 2b) à l'intérieur du virage est réduit de telle sorte, et simultanément le débit volumique de fluide sous pression acheminé au moteur de déplacement (2a ; 2b) à l'intérieur du virage par excitation de la vanne de commande (4a ; 4b) associée au moteur de déplacement (2a ; 2b) à l'intérieur du virage est réduit de telle sorte, que la pression côté arrivée du moteur de déplacement (2a ; 2b) à l'intérieur du virage est équilibrée sur la pression côté arrivée du moteur de déplacement (2b ; 2a) à l'extérieur du virage et une augmentation de la vitesse de rotation du moteur de déplacement (2b ; 2a) à l'extérieur du virage est empêchée,
ou
**en ce que** lors d'un déplacement en virage, le volume déplacé du moteur de déplacement (2b ; 2a) à l'extérieur du virage est augmenté de telle sorte, et simultanément le débit volumique de fluide sous pression acheminé au moteur de déplacement (2b ; 2a) à l'extérieur du virage par excitation de la vanne de commande (4b ; 4a) associée au moteur de déplacement (2b ; 2a) à l'extérieur du virage est augmenté de telle sorte, que la pression côté arrivée du moteur de déplacement (2b ; 2a) à l'extérieur du virage est équilibrée sur la pression côté arrivée du moteur de déplacement (2a ; 2b) à l'intérieur du virage et une diminution de la vitesse de rotation du moteur de déplacement (2a ; 2b) à l'intérieur du virage est empêchée.
